(19) Europäisches Patentamt / European Patent Office / Office européen des brevets

(11) **EP 3 127 377 B1**

(12) **EUROPEAN PATENT SPECIFICATION**

(45) Date of publication and mention
of the grant of the patent:
**11.07.2018 Bulletin 2018/28**

(21) Application number: **14726900.5**

(22) Date of filing: **08.05.2014**

(51) Int Cl.:
**H04W 52/02** (2009.01)

(86) International application number:
**PCT/EP2014/059412**

(87) International publication number:
**WO 2015/169361 (12.11.2015 Gazette 2015/45)**

(54) **A METHOD TO SAVE ENERGY FOR MOBILE TERMINALS IN WIRELESS NETWORK**

VERFAHREN ZUM ENERGIESPAREN FÜR MOBILE ENDGERÄTE IN EINEM DRAHTLOSEN NETZWERK

PROCÉDÉ D'ÉCONOMIE D'ÉNERGIE POUR TERMINAUX MOBILES DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2017 Bulletin 2017/06**

(73) Proprietor: **Huawei Technologies Co., Ltd.**
**Longgang District**
**Shenzhen, Guangdong 518129 (CN)**

(72) Inventors:
• **LI, Hong**
**S-164 40 Kista (SE)**
• **LEPPANEN, Kari**
**S-164 40 Kista (SE)**

(74) Representative: **Maiwald Patent- und Rechtsanwaltsgesellschaft mbH**
**Elisenhof**
**Elisenstraße 3**
**80335 München (DE)**

(56) References cited:
**WO-A2-2005/065056**

• **SHUGUANG CUI ET AL: "Energy-constrained modulation optimization for coded systems", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 1, 1 December 2003 (2003-12-01), pages 372-376, XP010677906, DOI: 10.1109/GLOCOM.2003.1258264 ISBN: 978-0-7803-7974-9**

**Description**

TECHNICAL FIELD

The present invention relates to the field of wireless network communication and particularly to wireless communication between a base station and user equipment and still more particularly to the provision of an energy saving communication between a base station and user equipment.

BACKGROUND

The issue of energy efficiency of wireless terminals is of significance since the volume of a portable battery in a wireless terminal is quite limited and hence a terminal can only transmit a finite number of bits. Without new approaches to this issue, there is a serious threat that the mobile users will be searching for power outlets rather than network access, and becoming once again bound to a single location. Therefore, one of the biggest challenges of future wireless communication systems is the need to improve the energy efficiency of mobile devices, i.e., to transmit maximal amount of information per consumed energy unit for battery-driven terminals so as to prolong the effective operational time.

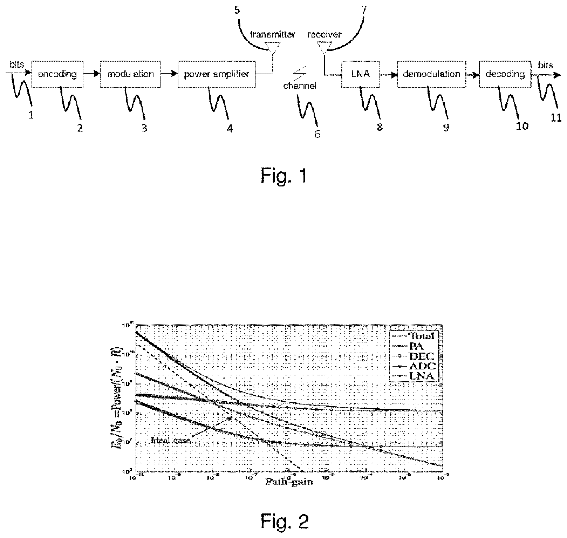

The basic modules of wireless transmitter and receiver are illustrated diagrammatically in figure 1 in which a digital signal 1 comprising bits are provided to an encoder 2 providing an encoded version of the input digital signal 1 which after modulation in a modulator 3 is provided to a power amplifier 4 that provides the necessary high frequency power to the transmitter antenna 5. The transmitter antenna 5 transmits the encoded and modulated signal via a channel 6.

The transmitted signal is received by a receiver comprising an antenna 7 and a low noise amplifier (LNA) 8. After amplification, the received signal is demodulated in a demodulator 9 and the demodulated signal is decoded in a decoder 10 that provides the resulting output digital signal 11.

Regarding the coding scheme (encoding and decoding), there are many coding schemes described in the literature, e.g. Turbo coding, LDPC, etc. Different coding schemes have different characteristics of processing complexity and decoding performance, but the general laws for most of these coding schemes are: (1) better coding performance implies more processing complexity, and (2) the process of decoding is usually much more complicated than that of encoding. In a real system, e.g. the 3rd Generation Patrnership Project Long Term Evolution (3GPP LTE) system, Turbo coding is mainly used. Turbo coding is characterized by its complexity of decoding, but encoding of the Turbo coding scheme is much less complicate than decoding. More complexity usually means higher energy consumption.

According to reference [1], describing the LTE system, the transmission power $P_{Tx}$ of user equipment on uplink is determined by the Transmission Power Control (TPC) algorithm defined in reference [1] as follows:

$$P_{Tx} = min\{P_{max}, P_0 + 10\log_{10}(M) + \alpha \cdot PL + \Delta_{TF} + f\} \text{ [dBm]} \qquad (1)$$

where $P_{max}$ is the maximum transmission power allowed for LTE User Equipment (UE). $P_0$ is a parameter that has a specific and nominal part. It is measured in dBm, expressing the power to be contained in one Physical Resource Block (PRB). $P_0$ can be seen as the reference power per PRB for the case of no path loss and no offsets. The parameter $M$ denotes the number of allocated PRB. The parameter $PL$ refers to the estimated path loss while the Fractional Path Loss Compensation (FPLC) factor $\alpha$ allows for a tradeoff between cell capacity and inter-cell interference.

The parameter $\Delta_{TF}$ represents a Modulation and Coding Scheme (MCS) dependent offset and $f$ stands for additional Closed Loop (CL) power control commands from the eNodeB.

In the 3GPP LTE system the Adaptive Modulation and Coding Scheme (AMCS) is also used. The fundamental idea of Adaptive Modulation is to dynamically adapt the modulation and coding scheme to the channel state conditions to achieve the highest spectral efficiency at all times in accordance to link quality degradation.

There are a number of problems associated with prior art equipment for wireless communication between a base station and a mobile terminal.

The classical measure for energy efficiency in wireless communications takes only the radiated transmission power on the radio transmission into account. This classical information theoretic approach is motivated by long range communication and thus neglects the internal processing power. The radiated transmission power on radio is only a fraction of the total power consumption of wireless communication nodes. Preliminary research results [1] show that, when communicating over smaller distances using energy-constrained devices, the power of some internal processing components e.g., decoding, LNA, DAC, ADC, etc. can be comparable to the transmit power. E.g., as shown in figure 2 that demonstrates the comparison of energy consumption in different components of a wireless node, the decoding module consumes a large proportion of the total energy consumption when the path gain gets higher. Thus, the power consumption of certain analog and digital components can have a strong impact on the total power consumption for short distance wireless communication.

The algorithm in focuses on how to reduce the transmission power of UE on the uplink connection with no optimization on the downlink connection. The downlink connection usually has much more heavy traffic than the uplink connection in a real wireless communication system and consequently a large amount of energy of wireless terminals is consumed on the downlink connection when receiving data from the base station and performing the internal process.

As for the adaptive modulation and coding scheme (AMCS), the existing adaptive modulation and coding scheme mainly focuses on improving the system capacity, but the energy efficiency of mobile terminals is not taken into account. And the operation of coding is always performed in the real wireless system, e.g., LTE system and method, although the coding rate may change sometime. In theory, an un-coded system also may alternatively be used. Nevertheless, the prior art AMCS performs the same coding scheme for both downlink and uplink connections, either coding with the same coding scheme or no coding, without considering the channel difference of the downlink and uplink connections.

Throughout this specification the following definitions of relevant technical terms apply:

| Abbreviation | Full name |
| --- | --- |
| 3GPP | 3rd Generation Partnership Project |
| AP | Access Point |
| BS | Base Station |
| LDPC | Low Density Parity Check |
| LNA | Low Noise Amplifier |
| LTE | Long Term Evolution |
| MCS | Modulation and Coding Scheme |
| PRB | Physical Resource Block |
| TPC | Transmission Power Control |
| UE | User Equipment |
| ADC | Analog to Digital Convert |
| DAC | Digital to Analog Convert |
| QoE | Quality of Experience |
| BCH | Bose-Chaudhuri-Hocquenghem |

WO 2005/065 056 A2 discloses a method to determine the most appropriate channel coding scheme to be used when a user equipment returns from sleep mode and resumes communication with a base station. The base station transmits a traffic indication to the user equipment, causing it to wake up. The user equipment transmits channel quality information to the base station, and this information is used to negotiate an appropriate channel coding scheme.

(Shuguang Cui et al., "Energy-constrained modulation optimization for coded systems", Globecom '03 - IEEE Global Telecommunications Conference, San Francisco, Dec. 1-5, 2003, pages 372-376, doi: 10.1109/GLOCOM.2003.1258264, ISBN: 978-0-7803-7974-9) teaches that when the power budget for a wireless link is to be calculated, for shorter distances, power consumption for signal transmission may give way to the power consumption for the signal processing as the dominating factor. Specifically, the power consumption for error correction coding may overcompensate the savings in transmit power achieved by such coding.

SUMMARY

On the above background it is an object of the present invention to provide a method and corresponding equipment for improving the energy efficiency of wireless terminals in a wireless cellular network, in particular, but not exclusively, for the short range communication, e.g., the dense small cell environment.

According to a first aspect of the present invention, the above and further objects and advantages are obtained by a method according to which it is determined if channel coding is needed on a downlink connection between a base station and a user equipment in a wireless communication system, based on given criteria.

The criteria can for instance be a static condition or a dynamic event triggered by the user equipment or the base station. The base station modulates and transmits the source bit data to the user equipment directly if channel coding is determined, based on the above mentioned criteria, not to be needed. If, on the other hand, channel coding is determined to be necessary, the most energy efficient coding scheme is selected. According to an implementation of the invention, the coding scheme is optimized for target energy efficiency for the user equipment with the constraint that the capacity of the user reaches a certain level.

Thus, according to the first aspect of the invention there is provided a method for saving energy for user equipment in a wireless network, the method comprising based on a decision obtained by a decision function determining based on predetermined criteria if channel coding is needed on a downlink connection between a base station and a user equipment and if said coding is determined to be needed, selecting an appropriate coding scheme that yield energy saving for the user equipment upon decoding.

If the coding is determined not to be needed, the base station modulates and transmits to-be-transmitted source bits without prior channel coding, whereas, if the coding is determined to be needed, the base station applies the channel coding to the to-be-transmitted source bits, and modulates and transmits the coded bits.

The user equipment applies channel coding on the uplink connection to the base station.

Specifically the user equipment could be a mobile device such as a mobile terminal.

In a first possible implementation form of the method according to the first aspect the decision is made for each data flow or periodically.

In a second possible implementation form of the method according to the first aspect as such or according to the first implementation form of the first aspect the criteria is a static condition.

In a third possible implementation form of the method according to the first aspect as such or to any of the preceding implementation forms of the first aspect, the static condition is the threshold of the Reference Signal Receive Power (RSRP) or the threshold of the Signal-to-Noise Ratio (SNR) or the threshold of the Signal-to-Interference-Noise Ratio (SINR) or the BIT Error Rate (BER).

In a fourth possible implementation form of the method according to the first aspect as such or to any of the preceding implementation forms of the first aspect, a channel model relating to the transmission between the base station and the user equipment is established in order to be able to make decisions on channel coding.

In a fifth possible implementation form of the method according to the first aspect as such or to any of the preceding implementation forms of the first aspect, the criteria is a dynamic event triggered by the user equipment or by the base station.

In a sixth possible implementation form of the method according to the first aspect as such or to any of the preceding implementation forms, the channel coding is based on a coding algorithm that is optimized for target energy efficiency for the user equipment with the constraint that the capacity reaches a predetermined level.

In a seventh possible implementation form of the method according to the first aspect as such or to any of the preceding implementation forms, the most efficient coding scheme is selected if channel coding is determined to be used.

In an eight possible implementation form of the method according to the first aspect as such or to any of the preceding implementation forms, a measurement model collects information for making a coding decision, measuring channel quality and interference level experienced by the user equipment receiver.

In a ninth possible implementation form of the method according to the first aspect as such or to any of the preceding implementation forms, different coding schemes are used on downlink and uplink connections, respectively.

In a tenth possible implementation form of the method according to the first aspect as such or to any of the preceding implementation forms the respective coding schemes on downlink and uplink connections are selected based on different criteria.

In an eleventh possible implementation form of the method according to the first aspect as such or to any of the preceding implementation forms the selections are performed separately.

In a twelfth possible implementation form of the method according to the first aspect as such or to any of the preceding implementation forms the user equipment is a mobile device.

In a thirteenth possible implementation form of the method according to the first aspect as such or to any of the preceding implementation forms the respective coding schemes on downlink and uplink connections are selected based on different criteria.

In a fourteenth possible implementation form of the method according to the first aspect as such or to any of the preceding implementation forms the selections are performed separately.

According to the second aspect of the invention there is provided a system for saving energy for user equipment in a wireless network, the system implementing any of the preceding implementations of the method according to the first aspect of the invention.

According to the second aspect of the invention there is thus provided a system for saving energy for user equipment in a wireless network, wherein the system comprises a user node or user equipment and a base station.

In the system according to the second aspect, the system comprises a user node or user equipment and a base station, where the system is comprises a decision function or module that is configured for determining if coding is needed on the downlink connection based on given criteria and, in case downlink coding is needed, determining the coding scheme to be applied. The base station is configured to apply a coding scheme on the downlink connection to the user equipment only after said coding has been determined to be needed, wherein the coding scheme is selected so that it yields energy saving for the user equipment upon decoding, whereas the user equipment always applies a coding scheme on the uplink connection to the base station.

In a possible implementation form of the system according to the second aspect, the system further comprises a measurement function or module configured for collecting channel information of making decisions and/or for measuring channel quality and/or measuring interference level experienced by the user node or user equipment receiver.

In another possible implementation form of the system according to the second aspect as such or to the preceding implementation form of the second aspect, the transmission between the user node or equipment and the base station takes place via an intermediate relay/pico node.

In another possible implementation form of the system according to the second aspect as such or to any of the preceding implementation forms of the second aspect, the transmission between the user node or equipment and the base station takes place via an intermediate relay/pico node.

According to a an example not presently claimed, there is provided an apparatus for saving energy for user equipment in a wireless network, which apparatus comprises a processor configured for determining if coding is needed on the downlink connection based on given criteria.

In a first possible implementation form of the apparatus according to the example, the apparatus comprises a processor configured to determine a specific coding scheme to be applied and a processor comprising a measurement function or module that is configured for collecting channels information that is needed in order to make the required decisions relating to the need of coding and the coding scheme and for measuring channel quality and interference level experienced by the user node/equipment receiver. It is understood that the above mentioned processors could be implemented as a single processor configures for carrying out the functions described above.

The apparatus according to said example can in a practical implementation be placed anywhere in the system, as for instance on the network side, in a separate device physically independent from existing network devices, such as a base station or administrator device, or, alternatively, the determining function can be embodied into the above existing network devices.

Further objects, features, advantages and properties of the apparatus and method according to the disclosure will become apparent from the detailed description.

BRIEF DESCRIPTION OF THE DRAWINGS

In the following detailed portion of the present invention, the invention will be explained in more detail with reference to the example embodiments shown in the drawings, in which:

Figure 1 shows a diagrammatic representation of the basic modules of a wireless transmitter and receiver;

Figure 2 shows a comparison of energy consumption in different components of a wireless communication node;

Figure 3 shows a flowchart illustrating the procedure of determining the coding scheme according to an embodiment of the invention on a downlink connection;

Figure 4 shows schematically a first coding and modulating scheme between user equipment and a base station on downlink and uplink connections;

Figure 5 shows schematically a second coding and modulating scheme between user equipment and a base station on downlink and uplink connections; and

Figure 6 shows schematically a third coding and modulating scheme between user equipment and a base station via a pico/Relay/WiFi.

DETAILED DESCRIPTION

In the following there are described example embodiments of the method and system according to the invention, but it is understood that that the description of these specific embodiments does not constitute a limitation of the invention and that the method according to the invention may be implemented by other embodiments as well.

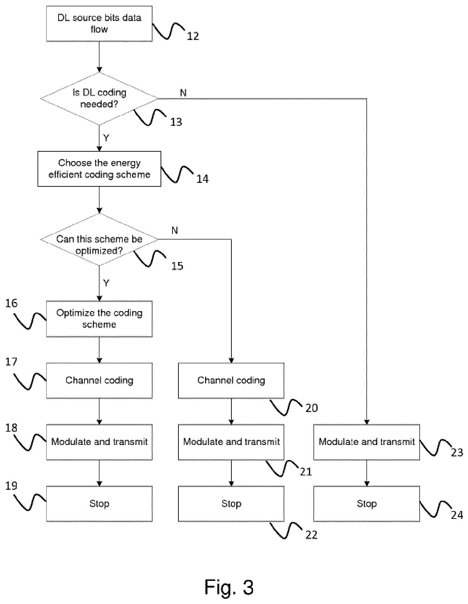

With reference to figure 3 there is shown a flowchart illustrating the overall procedure of determining the coding scheme on a downlink connection according to an example embodiment of the method according to the invention.

A down link bit data flow 12 is provided to a first decision function, schematically indicated by step 13 in the flow chart, which function, based on predefined criteria, determine whether coding of the data flow is needed. If this is not the case, the un-coded data flow proceeds to the modulation and transmission step 23.

On the other hand, if it is determined by the decision function in step 13 that coding is needed, a choice of an energy efficient coding scheme is made in step 14 and in step 15 it is determined if the chosen coding scheme can be optimized. If this is not the case, the still un-coded data are coded in the coding step 20, after which the coded data are modulated and transmitted in step 21.

If it is determined in step 15 that it is possible to optimize the chosen coding scheme, this is done in step 16, after which the still un-coded data are coded in step 17. The coded data are then modulated and transmitted in step 18.

If on the other hand it is determined in step 15 that the chosen coding scheme cannot be further optimized, the still un-coded data are coded in step 20, after which they are modulated and transmitted in step 21.

If down link coding is determined in step 13 not to be needed, the source data 12 are provided to a modulator and transmitted as indicated by step 23.

As mentioned above, a decision function in step 13 determines if coding on downlink is needed for some given criteria. The decision is made for each data flow or periodically.

The criteria can be a static condition, e.g. the threshold of Reference Signal Receive Power (RSRP). The electromagnetic signal attenuates substantially in air due to path loss and shadowing etc. which depends on the channel environment between the base station and the user equipment. The electromagnetic signal attenuation will cause the received signal power at receiver to be less than the transmit power at the transmitter. A channel model relating to the transmission between the base station and the user equipment is established in order to be able to make decisions on channel coding. For a given threshold of RSRP, e.g., $T$ dBm, if the RSRP at the user equipment is bigger than $T$ dBm, the channel coding is not needed for this case, implying that the channel quality between the base station and the user equipment is good enough for data transmission without channel coding. On the contrary, if the RSRP at the user equipment is less than $T$ dBm, the channel coding is needed. The threshold of RSRP can for instance be obtained experimentally based on history information.

Alternatively, the static conditions can for instance be the following parameters: threshold of Signal-to-Noise Ratio (SNR), Signal-to-Interference-Noise Ratio (SINR), Bit Error Rate (BER), etc., but it is emphasized that the static conditions are not limited to the above mentioned parameters.

Alternatively, the criteria can be a dynamic event, e.g. an event triggered by the user equipment or the base station.

For instance, the user equipment may request the network for energy saving. A user with full battery equipment usually prefers Quality of Experience (QoE) at the expense of energy saving, but this preference may change to energy saving to prolong the device usage when the remaining battery charge becomes low and no charger is available. In this situation, the user equipment may request the network for possible energy saving, even by sacrificing some quality of experience. Some multimedia services, e.g., online movie watching, could be a proper scenario in which to apply this scheme, in which the user equipment works on downlink receiving data from the network most of the time, large amount of energy is consumed on internal process, and the error rate of multimedia is relatively tolerant.

The event could be also be triggered by the base station, e.g. for simplifying the procedure of data processing at the base station if the measurement model that measures channel quality and interference level experienced by the user equipment receiver detects that the channel quality between the user equipment and the base station is good enough for data transmission without channel coding.

The base station modulates and transmits the source bit data to the user equipment directly, if channel coding is determined as not needed. On the contrary, if channel coding is determined to be needed, the most energy efficient coding scheme is selected among available coding schemes, e.g. Turbo, LDPC, BCH coding, etc. Different coding schemes have different characteristics of energy efficiency.

Furthermore, for some selected coding scheme it is still possible to optimize for target energy efficiency of the user equipment with the constraint that the capacity reaches to a certain level by setting some of the coding scheme parameters. An example for LDPC coding is to solve an optimization problem, which is a utility function with constraint as follows:

$$\text{minimize } P = \lambda E_{edge} \, max(R, B) \, log_{\lambda-1}\left(\frac{-log_2 P_e}{r_0 - R/B}\right) \qquad (2)$$

$$\text{s.t. } P_e^i < P_e, R^i > R$$

where P represents power, $\lambda$ is the number of edges connected to each variable nodes in LDPC decoder, $r_0$ is the theoretic achievable rate, $P_e$ is the given maximum error probability, $B$ is the available bandwidth, and $R$ is the target information rate (bps). $P_e^i$ and $R^i$ are the error probability and capacity of $UE_i$ respectively and where the abbreviation s.t. means "subject to". The optimization problem (2) can be solved by exhausting all the feasible solution, or by applying mathematic nonlinear programming algorithms or evolutionary algorithms. The solution to the utility function is used to set parameters for LDPC coding.

Additionally, a measurement function can collect channels information for making decisions, measuring channel quality and interference level experienced by the user equipment receiver.

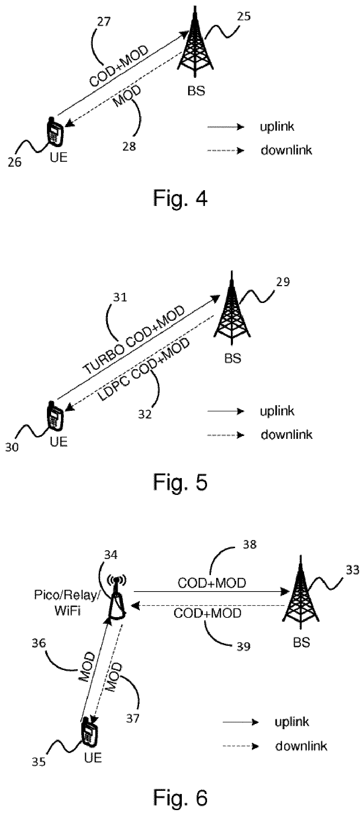

With reference to figure 4 there is schematically shown a first coding and modulating scheme between user equipment 26 and a base station 25 on downlink 28 and uplink 27 connections.

For a pair of communication peers in a wireless network, i.e. user equipment 26 and base station 25, the user equipment 26 performs always coding on the uplink connection 27, but on the downlink connection 28, the base station 25 modulates the original bits directly without coding when given criteria are met. The criteria can for instance be a static condition or a dynamic event triggered by the user equipment 26 or by the base station 25.

With reference to figure 5 there is schematically shown a second coding and modulating scheme between user equipment 30 and a base station 29 on downlink 32 and uplink 31 connections.

The coding schemes on the downlink 32 and the uplink 31 connections, respectively, can be selected based on different criteria, and the selections of coding scheme on the downlink 32 and uplink 31 connections are performed separately. Downlink 32 and uplink 31 transmission select the most appropriate coding scheme from the candidate coding schemes separately, for instance selecting the most energy efficient coding scheme for terminals on downlink 32, and selecting the most transmission efficient coding scheme on the uplink 31. A user equipment 30 with an energy constrained battery is much more sensitive to energy efficiency than a wire connected base station 29, whereas a base station 29 that is connected to a main power line shall principally focus more on improving system capacity.

Different coding schemes are characterized by different implementation complexities, at least to some extent corresponding to the characteristic of energy consumption. Thus, for instance, research has shown that LDPC coding consumes much less energy than Turbo coding for the same code rate.

With reference to figure 6 there is schematically shown a third coding and modulating scheme between user equipment 35 and a base station 33 via a pico/Relay/WiFi 34.

In the heterogeneous network where some intermediate nodes (such as 34) are located between the user equipment 35 and the base stations 33 in the cellular network, the intermediate nodes 34 can be implemented in different forms, such as a pico base station, relay node, WiFi Access Point (AP), Femto, etc. Three links are involved in the heterogeneous network: a direct link, an access link and a backhaul link. The direct link is the link between the user equipment 35 and the base station 33 (nor shown in figure 6), the access link refers to the link 36 between the user equipment 35 and the Pico/Relay/WiFi 34, while the backhaul link is the link 38 between the pico/relay/WiFi 34 and the base station 33.

The present invention also relates to a system for saving energy for user equipment in a wireless network, where the system is configured such that it is able to implement the method described above.

According to a first embodiment of the system according to the invention as shown schematically in figures 4 and 5, respectively, the system comprises a user node or user equipment 26, 30 and a base station 25, 29. The system further comprises a decision function or module that is configured for determining if coding is needed on the downlink connection based on given criteria. If coding is needed, the function or module (or another function or module dedicated to this purpose) further determines which specific coding scheme is to be applied. The system according to this embodiment further comprises a measurement function or module that is configured for collecting channels information that is needed in order to make the required decisions relating to the need of coding and the coding scheme and for measuring channel quality and interference level experienced by the user node/equipment receiver, etc.

According to a second embodiment of the system according to the invention as shown schematically in figure 6, the system comprises a user node or user equipment 35 and a base station 33. In this embodiment the system further comprises a relay/pico node 34, via which the communication between the user equipment 35 and the base station 33 takes place.

The energy saving scheme proposed by the present invention can be well applied also to the heterogeneous network and system shown in figure 6 in the sense that the access link usually belongs to the range of short distance wireless communication. Encoding/Decoding and modulating/demodulating are performed as normal wireless communication procedures on backhaul link, but on the downlink connection the coding scheme is determined according to the coding selection scheme described above. In the third embodiment, the process of coding on both the uplink and downlink connection is removed for the access link.

The method and corresponding system according to the present invention have the very important advantage over prior art methods and systems that it saves energy for wireless terminals.

In particular, multimedia services could be an example of services in which the teachings of the invention can be advantageously applied. In such services, the user equipment works on downlink receiving data from the network most of the time, no transmit power is consumed by the user equipment, a large amount of energy is consumed on internal processes, and the error rate is relatively tolerant. It is possible to be able to save more energy for user equipment by removing decoding for these kinds of services.

In the present specification, the term "comprising" as used in the claims does not exclude other elements or steps. The term "a" or "an" as used in the claims does not exclude a plurality.

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention.

**Claims**

1.  A method for saving energy for user equipment (26, 30, 35) in a wireless network, the method **characterized in** comprising

    determining (13), based on criteria, if channel coding is needed on a downlink connection (28, 32, 39) from a base station (25, 29, 33) to a user equipment (26, 30, 35) and

    > if said coding is determined (13) not to be needed, modulating and transmitting (23), by the base station (25, 29, 33), to-be-transmitted source bits (12) without prior channel coding (17, 20), whereas,
    > if said coding is determined (13) to be needed, selecting (14), by the base station (25, 29, 33), a coding scheme, applying (17, 20) the channel coding to the to-be-transmitted source bits (12), and modulating and transmitting (18, 21) the coded bits, wherein the coding scheme is selected so that it yields energy saving for the user equipment (26, 30, 35) upon decoding (10);

    the method further comprising: applying, by the user equipment (26, 30), channel coding on the uplink connection (27, 31) to the base station (25, 29).

2.  A method according to claim 1, wherein said decision is made for each data flow or periodically.

3.  A method according to claim 1 or 2, wherein said criteria are static conditions.

4.  A method according to claim 3, wherein said static condition is the threshold of the Reference Signal Receive Power, RSRP, or the threshold of the Signal-to-Noise Ratio, SNR, or the threshold of the Signal-to-Interference-Noise Ratio, SINR, or the BIT Error Rate, BER.

5.  A method according to any of the preceding claims 1 to 4, wherein a channel model relating to the transmission between the base station (25, 29, 33) and the user equipment (26, 30, 35) is established in order to be able to make decisions on channel coding.

6.  A method according to claim 1 or 2, wherein said criteria is a dynamic event triggered by the user equipment (26, 30, 35) or by the base station (25, 29, 33).

7.  A method according to claim 1, wherein said channel coding (17, 20) is based on a coding algorithm that is optimized for target energy efficiency for the user equipment (26, 30, 35) with the constraint that the capacity reaches a predetermined level.

8.  A method according to claim 7, wherein the most efficient coding scheme is selected (14) if channel coding (17, 20) is determined (13) to be used.

9.  A method according to any of the preceding claims, wherein a measurement model collects information for making a coding decision (13), measuring channel quality and interference level experienced by the user equipment (26, 30, 35) receiver.

10. A method according to any of the preceding claims, wherein different coding schemes are used on downlink (28, 32, 39) and uplink (27, 31) connections, respectively.

11. A system for saving energy for user equipment in a wireless network, wherein the system is **characterized in** comprising a user node or user equipment (26, 30, 35), a base station (25, 29, 33), and a decision function or module that is configured for determining (13) if coding is needed on the downlink (28, 32, 39) connection based on given criteria, and, in case downlink coding is needed, determining (14) the coding scheme to be applied, wherein the base station (25, 29, 33) is configured to apply a coding scheme on the downlink connection (28, 32, 39) to the user equipment (26, 30, 35) only after said coding has been determined (13) to be needed, wherein the coding scheme is selected so that it yields energy saving for the user equipment (26, 30, 35) upon decoding (10), whereas the user equipment (26, 30) always applies a coding scheme on the uplink connection (27, 31) to the base station (25, 29).

12. A system according to claim 11, wherein the system further comprises a measurement function or module configured for collecting channel information of making decisions (13) and/ or for measuring channel quality and/or measuring interference level experienced by the user node or user equipment (26, 30, 35) receiver.

**Patentansprüche**

1. Verfahren zum Energiesparen für ein Benutzergerät (26, 30, 35) in einem drahtlosen Netzwerk, das Verfahren **dadurch gekennzeichnet, dass** es Folgendes umfasst Bestimmen (13) auf der Grundlage von Kriterien, ob eine Kanalcodierung auf einer Abwärtsstreckenverbindung (28, 32, 39) von einer Basisstation (25, 29, 33) zu einem Benutzergerät (26, 30, 35) benötigt wird, und
   wenn bestimmt wird (13), dass die Codierung nicht benötigt wird, Modulieren und Senden (23) von Quellbits (12), die gesendet werden sollen, durch die Basisstation (25, 29, 33) ohne eine vorherige Kanalcodierung (17, 20), wohingegen,
   wenn bestimmt wird (13), dass die Codierung benötigt wird, Auswählen (14) durch die Basisstation (25, 29, 33) eines Codierschemas, Anwenden (17, 20) der Kanalcodierung auf die Quellbits (12), die gesendet werden sollen, und Modulieren und Senden (18, 21) der codierten Bits, wobei das Codierschema so ausgewählt wird, dass es beim Decodieren (10) zu einem Energiesparen für das Benutzergerät (26, 30, 35) führt;
   das Verfahren weiterhin umfassend: Anwenden durch das Benutzergerät (26, 30) einer Kanalcodierung auf der Aufwärtsstreckenverbindung (27, 31) an die Basisstation (25, 29).

2. Verfahren nach Anspruch 1, wobei die Entscheidung für jeden Datenstrom oder periodisch getroffen wird.

3. Verfahren nach Anspruch 1 oder 2, wobei die Kriterien statische Bedingungen sind.

4. Verfahren nach Anspruch 3, wobei die statische Bedingung der Schwellenwert der Bezugssignal-Empfangsleistung, RSRP, oder der Schwellenwert des Signal-Rausch-Verhältnisses, SNR, oder der Schwellenwert des Signal-Störgeräusch-Verhältnisses, SINR, oder die Bitfehlerrate, BER, ist.

5. Verfahren nach einem der vorhergehenden Ansprüche 1 bis 4, wobei ein Kanalmodell, das die Übertragung zwischen der Basisstation (25, 29, 33) und dem Benutzergerät (26, 30, 35) betrifft, festgelegt wird, um in der Lage zu sein, Entscheidungen über eine Kanalcodierung zu treffen.

6. Verfahren nach Anspruch 1 oder 2, wobei die Kriterien ein dynamisches Ereignis sind, das durch das Benutzergerät (26, 30, 35) oder durch die Basisstation (25, 29, 33) ausgelöst wird.

7. Verfahren nach Anspruch 1, wobei die Kanalcodierung (17, 20) auf einem Codieralgorithmus basiert, der für eine Zielenergieeffizienz für das Benutzergerät (26, 30, 35) mit der Einschränkung optimiert ist, dass die Kapazität einen vorgegebenen Pegel erreicht.

8. Verfahren nach Anspruch 7, wobei das effizienteste Codierschema ausgewählt wird (14), wenn bestimmt wird (13), dass eine Kanalcodierung (17, 20) verwendet werden soll.

9. Verfahren nach einem der vorhergehenden Ansprüche, wobei ein Messmodell Informationen zum Treffen einer Codierentscheidung (13) sammelt, wobei eine Kanalqualität und ein Störungspegel gemessen werden, die von dem Empfänger des Benutzergeräts (26, 30, 35) erfahren werden.

10. Verfahren nach einem der vorhergehenden Ansprüche, wobei verschiedene Codierschemata auf Abwärtsstreckenverbindungen (28, 32, 39) bzw. auf Aufwärtsstreckenverbindungen (27, 31) verwendet werden.

11. System zum Energiesparen für ein Benutzergerät in einem drahtlosen Netzwerk, wobei das System **dadurch gekennzeichnet ist, dass** es einen Benutzerknoten oder ein Benutzergerät (26, 30, 35), eine Basisstation (25, 29, 33) und eine Entscheidungsfunktion oder ein Entscheidungsmodul umfasst, das zum Bestimmen (13) konfiguriert ist, ob eine Codierung auf der Abwärtsstreckenverbindung (28, 32, 39) auf der Grundlage gegebener Kriterien benötigt wird, und, in dem Fall, dass eine Abwärtsstreckencodierung benötigt wird, Bestimmen (14) des Codierschemas, das angewendet werden soll, wobei die Basisstation (25, 29, 33) konfiguriert ist, ein Codierschema auf der Abwärtsstreckenverbindung (28, 32, 39) an das Benutzergerät (26, 30, 35) nur anzuwenden, nachdem bestimmt (13) wurde, dass die Codierung benötigt wird, wobei das Codierschema so ausgewählt wird, dass es beim Decodieren (10) zu einem Energiesparen für das Benutzergerät (26, 30, 35) führt, wohingegen das Benutzergerät (26, 30) auf der Aufwärtsstreckenverbindung (27, 31) an die Basisstation (25, 29) immer ein Codierschema anwendet.

**12.** System nach Anspruch 11, wobei das System weiterhin eine Messfunktion oder ein Messmodul umfasst, das zum Sammeln von Kanalinformationen zum Treffen von Entscheidungen (13) und/oder zum Messen einer Kanalqualität und/oder zum Messen eines Störungspegels konfiguriert ist, die von dem Benutzerknoten oder dem Empfänger des Benutzergeräts (26, 30, 35) erfahren werden.

## Revendications

**1.** Procédé d'économie d'énergie pour un équipement utilisateur (26, 30, 35) dans un réseau sans fil, le procédé étant **caractérisé en ce qu'**il comprend

la détermination (13), en fonction de critères, qu'un codage de canal est requis ou non sur une connexion de liaison descendante (28, 32, 39) depuis une station de base (25, 29, 33) vers un équipement utiisateur (26, 30, 35) et s'il est déterminé (13) que ledit codage n'est pas requis, la modulation et la transmission (23), par la station de base (25, 29, 33), de bits source à transmettre (12) sans codage de canal préalable (17, 20), tandis que

s'il est déterminé (13) que ledit codage est requis, la sélection (14), par la station de base (25, 29, 33) d'un plan de codage, l'application (17, 20) du codage de canal aux bits source à transmettre (12), et la modulation et la transmission (18, 21) des bits codés, dans lequel le plan de codage est sélectionné de manière à produire une économie d'énergie pour l'équipement utilisateur (26, 30, 35) lors du décodage (10) ; le procédé comprenant en outre : l'application, par l'équipement utiisateur (26, 30) d'un codage de canal sur la connexion de liaison montante (27, 31) vers la station de base (25, 29).

**2.** Procédé selon la revendication 1, dans lequel ladite décision est prise pour chaque flux de données ou périodiquement.

**3.** Procédé selon la revendication 1 ou 2, dans lequel lesdits critères sont des conditions statiques.

**4.** Procédé selon la revendication 3, dans lequel ladite condition statique est le seuil de la puissance de réception de signal de référence, RSRP, ou le seuil du rapport signal/bruit, SNR, ou le seuil du rapport signal utile sur brouillage et bruit, SINR ou le taux d'erreurs sur les bits, BER .

**5.** Procédé selon l'une quelconque des revendications précédentes 1 à 4, dans lequel un modèle de canal se rapportant à la transmission entre la station de base (25, 29, 33) et l'équipement utiisateur (26, 30, 35) est établi afin de pouvoir prendre des décisions portant sur le codage de canal.

**6.** Procédé selon la revendication 1 ou 2, dans lequel lesdits critères sont un événement dynamique dclenché par l'équipement utiisateur (26, 30, 35) ou par la station de base (25, 29, 33).

**7.** Procédé selon la revendication 1, dans lequel ledit codage de canal (17, 20) est basé sur un algorithme de codage qui est optimisé pour un rendement énergétique cible de l'équipement utiisateur (26, 30, 35) avec la contrainte que la capacité doit atteindre un niveau prédéterminé.

**8.** Procédé selon la revendication 7, dans lequel le plan de codage le plus efficace est sélectionné (14) s'il est déterminé (13) que le codage de canal (17, 20) doit être utilisé.

**9.** Procédé selon l'une quelconque des revendications précédentes, dans lequel un modèle de mesure collecte des informations pour prendre une décision (13) de codage, mesurer une qualité de canal et un niveau de brouillage subi par le récepteur de l'équipement utiisateur (26, 30, 35).

**10.** Procédé selon l'une quelconque des revendications précédentes, dans lequel des plans de codage différents sont utilisés sur la liaison descendante (28, 32, 39) et la liaison montante (27, 31), respectivement.

11. Système d'économie d'énergie pour un équipement utilisateur dans un réseau sans fil, dans lequel le système est **caractérisé en ce qu'**il comprend un noeud utilisateur ou équipement utilisateur (26, 30, 35), une station de base (25, 29, 33), et une fonction ou un module de décision configuré pour déterminer (13) qu'un codage est requis ou non sur la connexion de liaison descendante (28, 32, 39) en fonction de critères donnés, et, si un codage de liaison descendante est requis, déterminer (14) le plan de codage à appliquer, dans lequel la station de base (25, 29, 33) est configurée pour appliquer un plan de codage sur la connexion de liaison descendante (28, 32, 39) vers l'équipement utilisateur (26, 30, 35) uniquement après qu'il a été déterminé (13) que ledit codage est requis, dans lequel le plan de codage est sélectionné de manière à produire une économie d'énergie pour l'équipement utilisateur (26, 30, 35) lors du décodage (10), tandis que l'équipement utilisateur (26, 30) applique toujours un plan de codage sur la connexion de liaison montante (27, 31) vers la station de base (25, 29).

12. Système selon la revendication 11, le système comprenant en outre une fonction ou un module de mesure configuré pour collecter des informations de canal de prises de décisions (13) et/ou pour mesurer une qualité de canal et/ou mesurer un niveau de brouillage subi par le récepteur du noeud utilisateur ou de l'équipement utilisateur (26, 30, 35).

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2005065056 A2

**Non-patent literature cited in the description**

• **SHUGUANG CUI et al.** Energy-constrained modulation optimization for coded systems. *Globecom '03 - IEEE Global Telecommunications Conference,* 01 December 2003, ISBN 978-0-7803-7974-9, 372-376